# FASCICULE DE BREVET EUROPEEN

(11) **EP 2 173 550 B1**
(45) Date de publication et mention de la délivrance du brevet: **29.01.2014**
(21) Numéro de dépôt: 08829055.6
(22) Date de dépôt: 16.07.2008
(51) Int. Cl.: B32B 15/12, B32B 15/20, B65D 65/40, D21H 19/02, B32B 37/12, D21H 19/04, B32B 37/10, B65D 85/74

(54) **FEUILLE COMPOSITE, ROULEAU D'UNE TELLE FEUILLE, PAQUET DE FEUILLES, ET PROCÉDÉ DE FABRICATION**
VERBUNDFOLIE, ROLLE MIT EINER SOLCHEN FOLIE, FOLIENPAKET SOWIE VERFAHREN ZU DEREN HERSTELLUNG
COMPOSITE SHEET, ROLL OF SUCH SHEET, SHEET PACKET AND METHOD FOR MAKING SAME

(30) Priorité: 19.07.2007 FR 0756600
(43) Date de publication de la demande: 14.04.2010
(73) Titulaire: SCA TISSUE FRANCE, 92270 Bois-Colombes (FR)
(72) Inventeur: GRAFF, Pierre, F-68600 Wolfgantzen (FR); POMMIER, Nicolas, F-68740 BALGAU (FR); PROBST, Pierre, F-68770 Ammerschwihr (FR)
(74) Mandataire: Cortier, Sophie
(86) Numéro de dépôt international: PCT/FR2008/001034
(87) Numéro de publication internationale: WO 2009/030825

(56) Documents cités:
- EP-A- 0 480 907
- DE-C- 371 289
- FR-A- 937 666
- FR-A- 2 624 697
- GB-A- 305 515
- GB-A- 1 103 688
- GB-A- 190 420 542
- JP-A- 5 305 693
- US-A- 2 441 477
- US-A- 2 778 760
- US-A- 2 976 170
- US-A- 3 553 074
- US-A- 3 865 664

## Description

### DOMAINE TECHNIQUE DE L'INVENTION

La présente invention concerne une feuille dite composite à usage domestique ou collectif.

On connaît de nombreux exemples de feuilles dites "multiplis", encore appelées feuilles de papier tissue, comportant au moins deux plis distincts dont l'un au moins est un pli absorbant, notamment de ouate de cellulose.

Le papier dit « tissue » au sens de l'invention est défini dans la norme NF EN ISO 12625-1.

### ARRIERE PLAN TECHNIQUE DE L'INVENTION

Les feuilles multiplis sont d'un usage très courant et sont notamment disponibles conditionnées en rouleaux de feuilles prédécoupées, notamment sous la forme de rouleaux d'essuyage dits de « papier essuie-tout », ou encore de rouleaux « d'essuie-tout ».

Ces produits sont très appréciés pour leurs différents paramètres tels que leur souplesse, leur douceur, leur résistance en phase sèche et humide, leur capacité d'absorption des liquides, etc.

### BUTS DE L'INVENTION

L'invention vise à proposer un nouveau produit du type d'une feuille composite qui, tout en possédant les principales caractéristiques et qualités évoquées ci-dessus, permette de plus d'emballer des produits alimentaires chauds ou froids en les protégeant de manière efficace, notamment en vue de réaliser aisément un emballage total ou partiel de l'aliment qui puisse être quasiment étanche aux liquides et assureur une fonction de barrière thermique, qui peut de plus être pliée et dépliée plusieurs fois sans pour autant se détériorer.

### RÉSUMÉ DE L'INVENTION

Dans ce but, l'invention propose une feuille composite, à usage domestique, ou collectif, caractérisée en ce qu'elle comprend :
- un premier pli de papier tissue, ayant un degré d'absorption des liquides (g/g Norme CEN) supérieur à 5,
- et un second pli superposé qui est constitué par une couche métallique dont l'épaisseur est inférieure à 10 µm (microns).

Le second pli est de préférence une feuille métallique, et le second pli est lié au premier pli au moyen d'un matériau adhésif.

Un tel produit a notamment pour avantages d'être défroissable et donc réutilisable, ce qui n'est pas le cas d'une feuille de papier "alu" traditionnelle dont l'épaisseur est de l'ordre de 11 à 13 microns.

Un produit selon l'invention est cependant plus rigide qu'une telle feuille d'aluminium. Le produit composite conforme à l'invention garde ainsi à la fois sa souplesse et sa rigidité.

Ce produit est aussi absorbant qu'une feuille tissue multiplis, mais il est davantage résistant.

Un tel produit peut en outre être conditionné sous la forme d'un rouleau de feuille composite, prédécoupée ou non, qui peut être utilisé dans des distributeurs existants de feuille d'aluminium (aussi appelée « papier alu ») et/ou d'essuie-tout en équipant notamment de nombreuses cuisines domestiques ou professionnelles.

Selon d'autres caractéristiques de l'invention :
- l'épaisseur du second pli est inférieure à environ 7 microns (µm) ;
- le grammage (poids par unité de surface) du second pli est compris entre 13 et 19 grammes par mètre carré (g/m²), de préférence égal à environ 17 grammes par mètre carré (g/m²) ;
- le premier pli est une feuille de papier en ouate de cellulose gaufrée ;
- l'épaisseur de la feuille constituant le premier pli est comprise entre 0,25 et 0,45 millimètre (mm), de préférence égale à environ 0,35 millimètre (mm) ;
- le grammage de la feuille constituant le premier pli est compris entre 17 et 50 grammes par mètre carré (g/m²), de préférence égal à environ 19 grammes par mètre carré (g/m²) ;
- le grammage de la feuille composite est compris entre 30 et 69 grammes par mètre carré (g/m²) ;
- le matériau adhésif est une colle de type vinylique ;
- le matériau adhésif est déposé de préférence sur l'une des faces de la feuille métallique constituant le second pli ;
- la couche métallique constituant le second pli est une couche d'aluminium ;

L'invention propose aussi un rouleau constitué d'une feuille composite selon l'invention, caractérisé en ce qu'il est constitué d'une bande de feuille composite enroulée en continu.

Selon une caractéristique du rouleau, la bande de feuille composite enroulée en rouleau comporte des zones prédécoupées.

L'invention propose encore un paquet de feuilles individuelles, caractérisé en ce qu'il est constitué d'un empilage de feuilles composites individuelles selon l'invention qui peuvent être empilées, ou pliées et/ou enchevêtrées.

L'invention propose enfin un procédé de fabrication d'une feuille selon l'invention, caractérisé en ce qu'il consiste à lier le premier pli et le second pli par collage et pressage entre deux cylindres.

### BREVE DESCRIPTION DES FIGURES

D'autres caractéristiques et avantages de l'invention apparaîtront à la lecture de la description qui va suivre pour la compréhension de laquelle on se reportera aux dessins annexés dans lesquels :
- la figure 1 est une vue schématique en perspective d'une feuille composite selon l'invention ;
- la figure 2 est un schéma illustrant une première installation pour la mise en oeuvre du procédé selon l'invention ;
- la figure 3 est un schéma illustrant une deuxième installation pour la mise en oeuvre du procédé selon l'invention.

### DESCRIPTION DÉTAILLÉE D'UN MODE DE RÉALISATION DE L'INVENTION

Conformément à l'invention, il est proposé une feuille composite CS à deux plis, un premier pli P1 et un second pli P2, dont l'un P1 est une feuille de papier dit "tissue" en ouate de cellulose et dont l'autre est une couche métallique, et par exemple une feuille métallique et de préférence une feuille d'aluminium, les deux plis étant liés entre eux par une colle vinylique lorsque chaque pli est une feuille.

Le premier pli P1 est choisi pour sa résistance mécanique et son haut degré d'absorption des liquides g/g: > 5 (Norme CEN).

Le premier pli P1 est de préférence un pli en ouate de cellulose réalisé en phase humide, et notamment un produit dit TAD (Through Air Dry process - procédé de séchage par air traversant) obtenu selon les techniques connues décrites et représentées par exemple dans les documents WO-A1-01/44568, EP-A1-631.014 ou FR-A1-2.481.328.

Ainsi, le premier pli P1 en feuille de ouate de cellulose TAD est gaufré en phase humide selon des techniques connues dans le domaine et notamment au moyen d'une toile dite "marqueuse".

Les caractéristiques d'une telle feuille constituant le premier pli sont par exemple les suivantes :
Grammage : 20 g/m² (grammes par mètre carré).
Epaisseur: 0.35 mm (millimètre).

Gaufrage réalisé par marquage au moyen d'une toile en phase humide.

Résistance à la traction SM (Sens machine de la feuille): 300 N/m (Newtons par mètre).

Résistance à la traction ST (Sens Transverse de la feuille) : 260 N/m.

Allongement SM (Sens Machine) : 20%.

Allongement ST (Sens Transverse): 9%.

Résistance humide ST (Sens Transverse) : 75 N/m

Capacité d'absorption de liquides g/g: 15 (Norme CEN)

Capacité d'absorption de liquides g/m²: environ 315g/m²

La composition de la feuille est 100% pure ouate de cellulose dont environ 90% à base de fibres papetières de résineux et 10% à base de fibres papetières de feuillus.

Un tel premier pli P1 se caractérise ainsi par une grande souplesse, une capacité d'absorption importante, une bonne résistance humide et un aspect visuel analogue à un textile (« cloth like »).

Le second pli P2 est par exemple et de préférence une feuille d'aluminium recuit de faible épaisseur avec sa surface dégraissée dont les principales caractéristiques sont les suivantes :
Epaisseur : inférieure à 7µm (microns), par exemple égale à 6,0 µm (microns) +/- 8%.
Grammage : 17 g/m².
Allongement : 1%.
Limite élastique non mesurable pour une telle épaisseur réduite.

La feuille d'aluminium constitutive du second pli P2 est dite à contact ou usage alimentaire et conforme aux réglementations et Directives 2004/1935/EC et 89/109/EEC.

Par comparaison, une feuille d'aluminium - papier alu classique à usage ménager a une épaisseur de l'ordre de 11 à 13 µm (microns) et, par rapport à une telle feuille "épaisse" classique, la feuille ou couche très mince du second pli selon l'invention utilisée - seule - serait trop fragile pour l'emballage et elle supporterait très difficilement les contraintes mécaniques inhérentes aux différentes manipulations

De même, vis-à-vis du procédé de fabrication d'une telle feuille composite, il n'est absolument pas évident d'associer deux plis tels que les plis P1 et P2, notamment à cause de la très faible épaisseur du pli P2 et du respect des normes relatives au contact alimentaire qui imposent un choix de colle spécifique.

Préférentiellement, l'association des deux plis P1 et P2 est réalisée ici par application d'une colle spécifique ADH, à contact alimentaire (par exemple une dispersion aqueuse de polymère vinylique), qui est de préférence déposée sur une face du second pli P2. La colle ADH est par exemple une colle de référence "SUBO DA 37M" commercialisée par la Société BOSTIK (marque déposée). La colle ou l'adhésif utilisé doit respecter les réglementations nationales et internationales concernant le contact des matériaux avec les denrées alimentaires, et doit notamment être conforme aux normes et règlements nationaux et internationaux en la matière.

Le second pli P2, dont une face est revêtue de colle, est par exemple appliqué / appuyé sur le premier pli P1 par un cylindre de pression dit cylindre marieur.

A titre d'exemple, les principales caractéristiques de la feuille composite CS ainsi obtenue sont les suivantes :
Grammage : 39 g/m².
Epaisseur : 0.29mm.
Résistances sèches : SM (Sens Machine) : 363 N/m et ST (Sens Transverse) 369 N/m.
Allongement : 3%
Capacité d'absorption de liquides g/g: 9 (Norme CEN)

De plus, la résistance humide (à la traction) de la feuille composite CS est de 279N/m [SM (Sens Machine)] et de 294N/m [ST (Sens Transverse)]. Le ratio résistance humide /sec est compris entre environ 0.77 et environ 0.80.

L'invention n'est pas limitée à la conception du second pli sous la forme d'une feuille d'aluminium.

Il peut par exemple s'agir d'une feuille d'un autre métal ou d'un autre alliage métallique.

De même la couche métallique constitutive du second pli n'est pas nécessairement une feuille métallique.

La couche métallique peut aussi être réalisée par dépôt, pulvérisation ou enduction sur une des faces du premier pli P1.

La feuille composite selon l'invention peut par exemple être réalisée sous la forme d'une bande enroulée en continu en rouleau, par exemple selon les spécifications suivantes :
Diamètre extérieur du rouleau "neuf": 80 mm.
Longueur de la bande de feuille composite enroulée : 20 m.
Laize ou largeur du rouleau : 230 mm ou 300 mm.
Diamètre extérieur du mandrin sur lequel est enroulée la bande de feuille : 27 mm.

La bande de feuille composite enroulée en rouleau peut comporter des perforations ou "prédécoupes" selon le sens transversal afin de faciliter le débit du rouleau en feuilles individuelles de longueur prédéterminée.

La feuille composite selon l'invention peut aussi être commercialisée sous la forme d'un paquet de feuilles individuelles, par exemple de forme sensiblement carrée, qui peuvent être empilées, ou pliées et/ou enchevêtrées, etc.

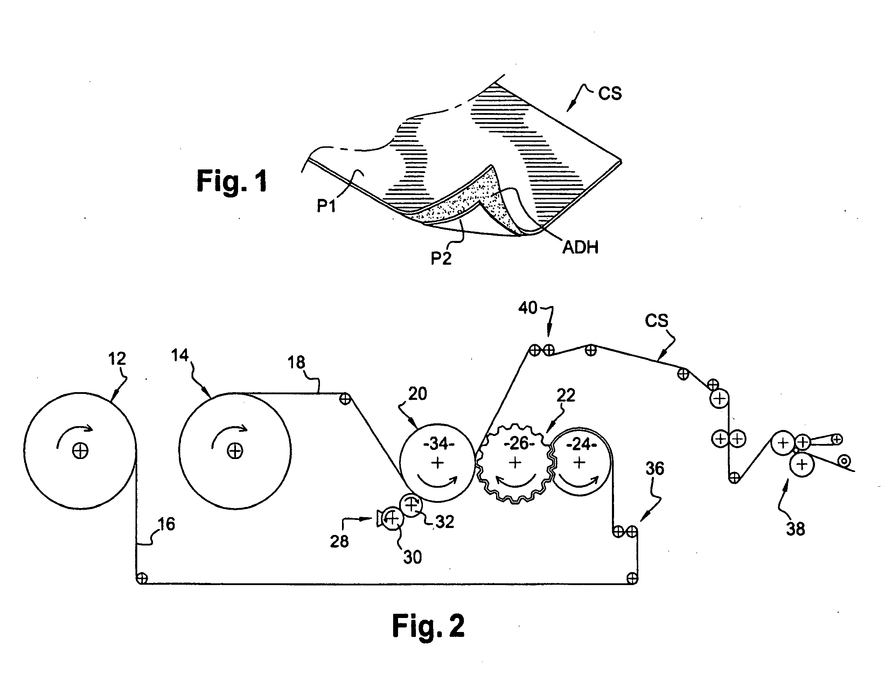

On décrira maintenant, à titre non limitatif et en référence à la figure 2, un exemple d'un procédé de réalisation d'une feuille composite CS selon l'invention.

On a représenté à la figure 2 une première ligne de transformation 10 composée de deux dévidoirs motorisés 12 et 14.

Le premier dévidoir 12 est destiné à recevoir la bobine de matière première en ouate de cellulose (tissue) 16, par exemple de type TAD.

Le second dévidoir 14 reçoit la bobine de feuille d'aluminium 18. La feuille 18 constitue ici le second pli P2 au sens de l'invention.

La laize ou largeur des bobines est définie en fonction des standards dimensionnels habituels.

En aval des dévidoirs 12 et 14, en considérant le sens de défilement des feuilles à partir des dévidoirs, l'installation 10 comporte une unité 20 de liage des deux plis constitutifs de la feuille composite CS selon l'invention, ainsi qu'une unité 22 de transformation de la feuille 16 pour constituer le premier pli P1 au sens de l'invention.

De manière connue, l'unité 22 comporte un cylindre de caoutchouc 24 et un cylindre gravé 26, ce dernier constituant aussi le cylindre marieur de l'unité 20 de liage.

Après passage entre les cylindres 24 et 26, la feuille 16 gaufrée constitue le premier pli P1 au sens de l'invention.

L'unité 20 de liage des deux plis P1 et P2 comporte ici une station 28 de collage comportant une chambre à racle 30 contenant l'adhésif ADH, et un cylindre applicateur 32 de transfert de l'adhésif sur la face en vis-à-vis du second pli P2 (feuille 18).

L'unité 20 comporte enfin un cylindre d'association 34 en caoutchouc dur.

Lors de leur passage entre les cylindres d'association 26 et 34, les deux plis P1 et P2 sont liés entre eux pour constituer la feuille composite CS qui est ensuite enroulée en continu sur une bobineuse 38.

Afin d'absorber les éventuels désordres liés aux différences d'allongement entre les deux plis P1 et P2, un groupe de tirage-régulation 36 est agencé en amont du cylindre 24.

Les plis P1 et P2 liés entre eux cheminent vers des cylindres 40 de tirage permettant une alimentation homogène, sans problème de plis, à l'entrée de la bobineuse 38.

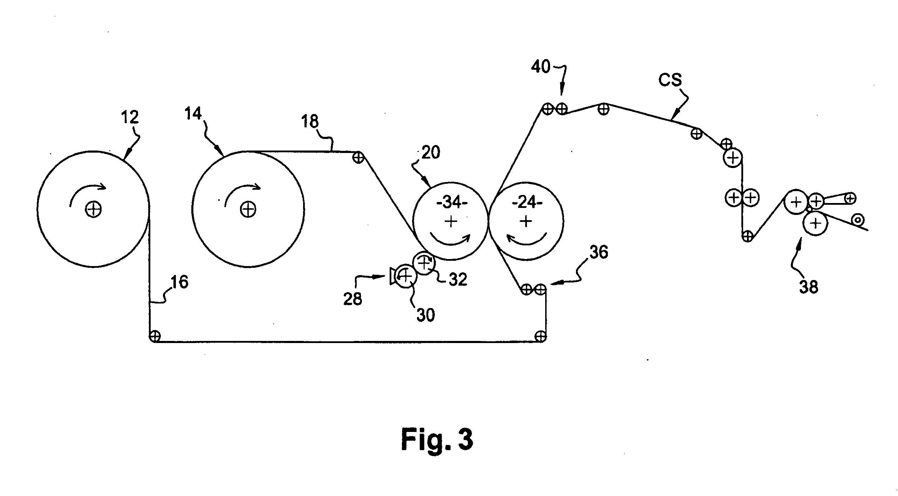

On a représenté à la figure 3 une deuxième ligne de transformation 10.

Cette ligne sera décrite par comparaison avec la première ligne illustrée à la figure 2, les éléments identiques, analogues ou similaires étant désignés par les mêmes chiffres de référence.

La feuille obtenue grâce à cette deuxième ligne est caractérisée en ce que la feuille 16 qui constitue le premier pli P1 au sens de l'invention n'est pas gaufrée.

A cet effet, le cylindre gravé 26 de la première ligne est supprimé.

Pour être assemblées, les feuilles 16 et 18 passent ainsi entre le cylindre applicateur 34 et le cylindre "marieur" 24 qui est ici lisse. Les cylindres 34 et 24 entre lesquelles les deux feuilles sont pressées, sont de préférence en acier.

## Revendications

1. Feuille composite (CS) absorbante à usage domestique ou collectif, **caractérisée en ce qu'**elle comprend :
- un premier pli (P1) de papier tissue ayant un degré d'absorption des liquides (g/g Norme CEN) supérieur à 5,
- et un second pli (P2) superposé qui est constitué par une couche métallique dont l'épaisseur est inférieure à 10 microns (µm).

2. Feuille composite selon la revendication précédente, **caractérisée en ce que** le second pli (P2) est une feuille métallique, et **en ce que** le second pli (P2) est lié au premier pli (P1) au moyen d'un matériau adhésif (ADH).

3. Feuille composite (CS) selon l'une des revendications 1 ou 2, **caractérisée en ce que** l'épaisseur du second pli (P2) est inférieure à 7 microns (µm).

4. Feuille composite (CS) selon l'une des revendications 1 ou 2, **caractérisée en ce que** le grammage (poids par unité de surface) du second pli (P2) est compris entre 13 et 19 grammes par mètre carré (g/m²), de préférence égal à environ 17 grammes par mètre carré (g/m²).

5. Feuille composite (CS) selon l'une quelconque des revendications précédentes, **caractérisée en ce que** premier pli (P1) est une feuille de papier en ouate de cellulose gaufrée.

6. Feuille composite (CS) selon la revendication 5, **caractérisée en ce que** l'épaisseur de la feuille constituant le premier pli (P1) est compris entre 0,25 et 0,45 millimètres (mm), de préférence égale à environ 0,35 millimètres (mm).

7. Feuille composite (CS) selon la revendication 5, **caractérisée en ce que** le grammage (poids par unité de surface) de la feuille constituant le premier pli (P1) est comprise entre 17 et 50 grammes par mètre carré (g/m²), de préférence égal à environ 19 grammes par mètre carré (g/m²).

8. Feuille composite (CS) selon les revendications 4 et 7 prises en combinaison, **caractérisée en ce que** le grammage (poids par unité de surface) de la feuille composite (CS) est compris entre 30 et 69 grammes par mètre carré (g/m²).

9. Feuille composite (CS) selon la revendication 2, **caractérisée en ce que** ledit matériau adhésif (ADH) est une colle de type vinylique.

10. Feuille composite (CS) selon la revendication 2, **caractérisée en ce que** ledit matériau adhésif (ADH) est déposé de préférence sur l'une des faces de la feuille métallique constituant le second pli (P2).

11. Feuille composite (CS) selon l'une quelconque des revendications précédentes, **caractérisée en ce que** ladite couche métallique constituant le second pli (P2) est une couche d'aluminium.

12. Rouleau constitué d'une feuille composite selon l'une quelconque des revendications précédentes, **caractérisé en ce qu'**il est constitué d'une bande de feuille composite (CS) enroulée en continu.

13. Rouleau selon la revendication précédente, **caractérisé en ce que** la bande de feuille composite (CS) enroulée en rouleau comporte des zones prédécoupées.

14. Paquet de feuilles individuelles, **caractérisé en ce qu'**il est constitué d'un empilage de feuilles composites (CS) individuelles selon l'une quelconque des revendications 1 à 12, qui peuvent être empilées, ou pliées et/ou enchevêtrées.

15. Procédé de fabrication d'une feuille selon la revendication 10, **caractérisé en ce qu'**il consiste à lier le premier pli (P1) et le second pli (P2) par collage et pressage entre deux cylindres.

## Patentansprüche

1. Absorbierende Verbundfolie (CS) für den Haushaltsgebrauch oder kollektiven Gebrauch, **dadurch gekennzeichnet, dass** sie Folgendes umfasst:
- eine erste Webpapierlage (P1) mit einem Absorptionsgrad für Flüssigkeiten (g/g Norm CEN) über 5,
- und eine darüber angeordnete zweite Lage (P2), die von einer Metallschicht gebildet ist, deren Dicke geringer als 10 Mikrometer (µm) ist.

2. Verbundfolie nach dem vorhergehenden Anspruch, **dadurch gekennzeichnet, dass** die zweite Lage (P2) eine metallische Folie ist, und dass die zweite Lage (P2) mit der ersten Lage (P1) mit Hilfe eines Haftmaterials (ADH) verbunden ist.

3. Verbundfolie (CS) nach einem der Ansprüche 1 oder 2, **dadurch gekennzeichnet, dass** die Dicke der zweiten Lage (P2) geringer als 7 Mikrometer (µm) ist.

4. Verbundfolie (CS) nach einem der Ansprüche 1 oder 2, **dadurch gekennzeichnet, dass** das Grammgewicht (Gewicht pro Flächeneinheit) der zweiten Lage (P2) zwischen 13 und 19 Gramm pro Quadratmeter (g/m²) beträgt, vorzugsweise gleich ungefähr 17 Gramm pro Quadratmeter (g/m²) ist.

5. Verbundfolie (CS) nach einem der vorhergehenden Ansprüche, **dadurch gekennzeichnet, dass** die erste Lage (P1) eine Papierfolie aus geprägter Zellstoffwatte ist.

6. Verbundfolie (CS) nach Anspruch 5, **dadurch gekennzeichnet, dass** die Dicke der Folie, die die erste Lage (P1) darstellt, zwischen 0,25 und 0,45 Millimeter (mm) beträgt, vorzugsweise gleich ungefähr 0,35 Millimeter (mm) ist.

7. Verbundfolie (CS) nach Anspruch 5, **dadurch gekennzeichnet, dass** das Grammgewicht (Gewicht pro Flächeneinheit) der Folie, die die erste Lage (P1) bildet, zwischen 17 und 50 Gramm pro Quadratmeter (g/m²) beträgt, vorzugsweise gleich ungefähr 19 Gramm pro Quadratmeter (g/m²) ist.

8. Verbundfolie (CS) nach den Ansprüchen 4 und 7 in Kombination, **dadurch gekennzeichnet, dass** das Grammgewicht (Gewicht pro Flächeneinheit) der Verbundfolie (CS) zwischen 30 und 69 Gramm pro Quadratmeter (g/m²) beträgt.

9. Verbundfolie (CS) nach Anspruch 2, **dadurch gekennzeichnet, dass** das Haftmaterial (ADH) ein Kleber vom Typ Vinylkleber ist.

10. Verbundfolie (CS) nach Anspruch 2, **dadurch gekennzeichnet, dass** das Haftmaterial (ADH) vorzugsweise auf einer der Seiten der metallischen Folie, die die zweite Lage (P2) bildet, aufgebracht wird.

11. Verbundfolie (CS) nach einem der vorhergehenden Ansprüche, **dadurch gekennzeichnet, dass** die metallische Schicht, die die zweite Lage (P2) bildet, eine Aluminiumschicht ist.

12. Rolle, die aus einer Verbundfolie nach einem der vorhergehenden Ansprüche besteht, **dadurch gekennzeichnet, dass** sie von einem kontinuierlich aufgewickelten Verbundfolienband (CS) gebildet ist.

13. Rolle nach dem vorhergehenden Anspruch, **dadurch gekennzeichnet, dass** das zur Rolle aufgewickelte Verbundfolienband (CS) vorausgeschnittene Zonen umfasst.

14. Paket aus Einzelfolien, **dadurch gekennzeichnet, dass** es aus einer Stapelung von Einzelverbundfolien (CS) nach einem der Ansprüche 1 bis 12 besteht, die gestapelt oder gefaltet und/oder ineinandergreifend angeordnet sein können.

15. Verfahren zur Herstellung einer Folie nach Anspruch 10, **dadurch gekennzeichnet, dass** es darin besteht, die erste Lage (P1) und die zweite Lage (P2) durch Kleben und Pressen zwischen zwei Walzen zu verbinden.

## Claims

1. Absorbent composite sheet (CS) for domestic or public use, **characterized in that** it comprises:
- a first ply (P1) of tissue paper with a degree of absorption of liquids greater than 5 (g/g CEN standard),
- a second superposed ply (P2) which is composed of a metal layer, the thickness of which is less than 10 microns (µm).

2. Composite sheet according to the preceding claim, **characterized in that** the second ply (P2) is a metal foil, and **in that** the second ply (P2) is joined to the first ply (P1) by means of an adhesive (ADH).

3. Composite sheet (CS) according to one of Claims 1 or 2, **characterized in that** the thickness of the second ply (P2) is less than 7 microns (µm).

4. Composite sheet (CS) according to one of Claims 1 or 2, **characterized in that** the basis weight (weight per unit area) of the second ply (P2) is between 13 and 19 grams per square metre (g/m²), preferably equal to around 17 grams per square metre (g/m²).

5. Composite sheet (CS) according to any one of the preceding claims, **characterized in that** the first ply (P1) is an embossed tissue paper sheet.

6. Composite sheet (CS) according to Claim 5, **characterized in that** the thickness of the sheet forming the first ply (P1) is between 0.25 and 0.45 millimetre (mm), preferably equal to around 0.35 millimetre (mm).

7. Composite sheet (CS) according to Claim 5, **characterized in that** the basis weight (weight per unit area) of the sheet forming the first ply (P1) is between 17 and 50 grams per square metre (g/m²), preferably equal to around 19 grams per square metre (g/m²).

8. Composite sheet (CS) according to Claims 4 and 7 taken in combination, **characterized in that** the basis weight (weight per unit area) of the composite sheet (CS) is between 30 and 69 grams per square metre (g/m²).

9. Composite sheet (CS) according to Claim 2, **characterized in that** said adhesive (ADH) is a vinyl type adhesive.

10. Composite sheet (CS) according to Claim 2, **characterized in that** said adhesive (ADH) is preferably deposited on one of the faces of the metal foil forming the second ply (P2).

11. Composite sheet (CS) according to any one of the preceding claims, **characterized in that** said metal layer forming the second ply (P2) is an aluminium layer.

12. Roll composed of a composite sheet according to any one of the preceding claims, **characterized in that** it is formed from a continuously wound strip of composite sheet (CS).

13. Roll according to the preceding claim, **characterized in that** the strip of composite sheet (CS) wound as a roll comprises precut regions.

14. Packet of individual sheets, **characterized in that** it is composed of a stack of individual composite sheets (CS) according to any one of Claims 1 to 12, which may be stacked up, or folded and/or interfolded.

15. Process for manufacturing a sheet according to Claim 10, **characterized in that** it consists in joining the first ply (Pl) and the second ply (P2) by bonding and pressing between two rolls.
